# EUROPÄISCHE PATENTSCHRIFT

(11) **EP 2 637 897 B1**
(45) Veröffentlichungstag und Bekanntmachung des Hinweises auf die Patenterteilung: **05.10.2016**
(21) Anmeldenummer: 11779182.2
(22) Anmeldetag: 07.11.2011
(51) Int. Cl.: B60R 1/00, H04N 7/18

(54) **VERFAHREN ZUM ANZEIGEN VON BILDERN AUF EINER ANZEIGEEINRICHTUNG, KAMERASYSTEM UND KRAFTFAHRZEUG MIT EINEM KAMERASYSTEM**
METHOD FOR DISPLAYING IMAGES ON A DISPLAY DEVICE, A CAMERA SYSTEM AND MOTOR VEHICLE HAVING A CAMERA SYSTEM
PROCÉDÉ POUR AFFICHER DES IMAGES SUR UN DISPOSITIF D'AFFICHAGE, SYSTÈME DE CAMÉRA ET VÉHICULE AUTOMOBILE MUNI D'UN SYSTÈME DE CAMÉRA

(30) Priorität: 12.11.2010 DE 102010051205
(43) Veröffentlichungstag der Anmeldung: 18.09.2013
(73) Patentinhaber: Valeo Schalter und Sensoren GmbH, 74321 Bietigheim-Bissingen (DE)
(72) Erfinder: REILHAC, Patrice, 73732 Esslingen (DE)
(74) Vertreter: Jauregui Urbahn, Kristian
(86) Internationale Anmeldenummer: PCT/EP2011/069501
(87) Internationale Veröffentlichungsnummer: WO 2012/062689

(56) Entgegenhaltungen:
- WO-A-2011/047756
- DE-A1- 10 043 099
- DE-A1- 10 315 032

## Beschreibung

Die Erfindung betrifft ein Verfahren zum Anzeigen von Bildern auf einer Anzeigeeinrichtung in einem Kraftfahrzeug. Zumindest eine Kamera erfasst Bilddaten über eine Umgebung des Kraftfahrzeugs. Die Anzeigeeinrichtung wird in zumindest zwei Betriebsmodi betrieben, die sich in der Ansicht der Umgebung auf der Anzeigeeinrichtung voneinander unterscheiden. Eine Aktivierung eines Betriebsmodus der Anzeigeeinrichtung erfolgt aufgrund einer Eingabe einer Bedienperson. Die Erfindung betrifft außerdem ein Kamerasystem für ein Kraftfahrzeug, wie auch ein Kraftfahrzeug mit einem Kamerasystem.

Das Interesse gilt vorliegend bevorzugt einem Kamerasystem mit einer Vielzahl von Kameras, mittels denen ein Umgebungsbereich des Kraftfahrzeugs erfasst wird, nämlich insbesondere die gesamte Umgebung um das Kraftfahrzeug herum. Solche Multikamerasysteme sind bereits Stand der Technik. Eine zentrale Recheneinrichtung beziehungsweise Steuereinrichtung empfängt die Bilddaten aller Kameras und kann aus diesen Bilddaten unterschiedlichste Bilddarstellungen erzeugen, welche dann auf einer Anzeigeeinrichtung - etwa einem Display - angezeigt werden können. Die angezeigte Bilddarstellung kann auf den Bilddaten einer beliebigen Kombination der Kameras beruhen; sie kann also entweder auf den Bilddaten einer einzigen Kamera oder aber auf den Bilddaten einer Mehrzahl von Kameras beruhen. Ein Beispiel für eine Bilddarstellung, welche auf den Bilddaten einer Vielzahl von Kameras beruht, ist das so genannte "Bird View". Diese Bilddarstellung zeigt das Kraftfahrzeug sowie seine Umgebung aus einer Vogelperspektive beziehungsweise aus einem virtuellen Blickpunkt und einer virtuellen Blickrichtung. Ein weiteres Beispiel für eine Bilddarstellung ist das so genannte "Rear View"; diese Bilddarstellung beruht auf den Bilddaten einer Kamera, welche den Bereich hinter dem Kraftfahrzeug erfasst. Hier wird also das Bild einer Kamera angezeigt, welche beispielsweise an einem hinteren Stoßfänger oder aber einer Heckklappe des Kraftfahrzeugs angebracht ist.

Ein Multikamerasystem ist beispielsweise aus dem Dokument US 2006/0139488 A1 und dem Dokument DE 103 15 032 bekannt.

Ein Multikamerasystem ist außerdem aus der Druckschrift EP 1 179 958 A1 bekannt. Dieses Kamerasystem beinhaltet eine Vielzahl von Kameras, und es kann aus den Bilddaten mehrerer Kameras ein synthetisches Bild erzeugt und angezeigt werden, welches das Kraftfahrzeug und seine Umgebung aus einem virtuellen Blickpunkt und einer virtuellen Blickrichtung zeigt. Dabei wird die Ansicht - also die virtuelle Blickrichtung, der Blickpunkt sowie der angezeigte Bildausschnitt - in Abhängigkeit von einem Fahrzustand des Kraftfahrzeugs variiert. Der Fahrzustand umfasst beispielsweise die Fahrtrichtung, die Geschwindigkeit des Kraftfahrzeugs sowie einen Abstand zwischen dem Kraftfahrzeug und einem fahrzeugexternen Hindernis.

Es ist außerdem Stand der Technik, die Position eines Fahrzeugspiegels oder aber einer Kamera bei einer Kurvenfahrt eines Kraftfahrzeugs zu verstellen. Eine solche Kurvenfahrt kann anhand von Daten eines GPS-Sensors (global positioning system) erkannt werden. Ein derartiges Verfahren ist aus dem Dokument EP 1 327 560 A1 bekannt.

Aus der Druckschrift FR 2 785 434 B1 ist ebenfalls ein Kamerasystem für Kraftfahrzeuge bekannt. Bei diesem System kann die Brennweite einer Kamera in Abhängigkeit von einem Fahrzustand des Kraftfahrzeugs verändert werden. Es können auch GPS-Daten verwendet werden, um die aktuelle Geschwindigkeit des Kraftfahrzeugs zu ermitteln. Anhand der GPS-Daten kann auch erkannt werden, ob sich das Kraftfahrzeug in einer Stadt oder aber auf einer Autobahn befindet, und die Brennweite der Kamera kann auch unter Berücksichtigung dieser Informationen angepasst werden.

Sind eine Vielzahl von Kameras vorhanden, so kann zwischen unterschiedlichsten Ansichten auf der Anzeigeeinrichtung umgeschaltet werden. Dies ist auch dann möglich, wenn nur eine einzige Kamera vorgesehen ist - in diesem Falle kann zwischen unterschiedlichen Teilbildern des gesamten aufgenommen Bildes der Kamera umgeschaltet werden. Einerseits kann die Umschaltung zwischen unterschiedlichen Ansichten aufgrund einer Eingabe des Fahrers erfolgen; andererseits kann auch von einer Ansicht zu einer anderen Ansicht automatisch umgeschaltet werden. Es ist beispielsweise bekannt, nach Einlegen des Rückwärtsganges das Bild derjenigen Kamera anzuzeigen, die den Bereich hinter dem Kraftfahrzeug erfasst ("Rear View").

Es ist Aufgabe der Erfindung, ein Verfahren sowie ein Kamerasystem für ein Kraftfahrzeug zu schaffen, bei denen das Umschalten zwischen verschiedenen Ansichten auf der Anzeigeeinrichtung besonders benutzerfreundlich und bedarfsgerecht erfolgt.

Diese Aufgabe wird erfindungsgemäß durch ein Verfahren mit den Merkmalen gemäß Patentanspruch 1 gelöst, wie auch durch ein Kamerasystem mit den Merkmalen des Patentanspruchs 10 sowie durch ein Fahrzeug mit den Merkmalen des Patentanspruchs 11. Vorteilhafte Ausführungen der Erfindung sind Gegenstand der abhängigen Patentansprüche und der Beschreibung.

Ein erfindungsgemäßes Verfahren dient zum Anzeigen von Bildern auf einer Anzeigeeinrichtung in einem Kraftfahrzeug. Durch zumindest eine Kamera werden Bilddaten über eine Umgebung des Kraftfahrzeugs erfasst, und die Anzeigeeinrichtung wird in zumindest zwei Betriebsmodi betrieben. Die Betriebsmodi unterscheiden sich untereinander in einer Ansicht der Umgebung, welche auf der Anzeigeeinrichtung angezeigt wird. Es erfolgt ein Aktivieren eines Betriebsmodus der Anzeigeeinrichtung aufgrund einer Eingabe einer Bedienperson, nämlich beispielsweise des Fahrers. Beim Aktivieren des Betriebsmodus durch die Bedienperson wird ein diesen Betriebsmodus angebender bzw. kennzeichnender Datenwert in einer Speichereinrichtung abgelegt, nämlich zugeordnet zu einem aktuellen Wert zumindest eines Messparameters des Kraftfahrzeugs. Nach erneutem Erreichen dieses Wertes für den Messparameter wird der zugeordnete Betriebsmodus der Anzeigeeinrichtung automatisch, also unabhängig von der Bedienperson aktiviert.

Erfindungsgemäß wird also ein Verfahren beziehungsweise ein lernfähiges Kamerasystem geschaffen, bei welchem das Verhalten der Bedienperson bezüglich der Auswahl des Betriebsmodus der Anzeigeeinrichtung in verschiedenen Situationen erfasst beziehungsweise "gelernt" wird. Wird nämlich ein erster Betriebsmodus durch die Bedienperson aktiviert, so wird ein Datenwert abgespeichert, welcher diesen ersten Betriebsmodus charakterisiert beziehungsweise eindeutig kennzeichnet. Zugeordnet zu diesem Datenwert wird außerdem der aktuelle Wert zumindest eines Messparameters des Kraftfahrzeugs abgelegt. Mit anderen Worten wird einerseits das Verhalten der Bedienperson (Aktivieren des ersten Betriebsmodus) und andererseits die aktuelle Situation (der aktuelle Wert des Messparameters) erfasst und abgespeichert. Liegt dieser Wert für den Messparameter erneut vor, so wird der erste Betriebsmodus automatisch aktiviert. Das erfindungsgemäße Verfahren ermöglicht ein benutzerfreundliches sowie bedarfsgerechtes Umschalten zwischen unterschiedlichen Ansichten auf der Anzeigeeinrichtung. Es kann nämlich stets die vom Fahrer gewünschte beziehungsweise bevorzugte Ansicht automatisch angezeigt werden.

Die zumindest zwei Betriebsmodi unterscheiden sich also voneinander in der angezeigten Ansicht der Umgebung des Kraftfahrzeugs. Dies kann beispielsweise so aussehen, dass in unterschiedlichen Betriebsmodi jeweils ein anderes Teilbild eines Bildes einer einzelnen Kamera angezeigt wird. Es erweist sich jedoch als besonders vorteilhaft, wenn zumindest zwei Kameras Bilddaten über die Umgebung des Kraftfahrzeugs erfassen und sich die Betriebsmodi der Anzeigeeinrichtung in der Auswahl zumindest einer Kamera voneinander unterscheiden, auf deren Bilddaten das angezeigte Bild beruht. Beispielsweise beruht das angezeigte Bild in einem ersten Betriebsmodus auf Bilddaten einer ersten Kamera, in einem zweiten Betriebsmodus auf Bilddaten einer zweiten Kamera, in einem dritten Betriebsmodus auf Bilddaten einer dritten Kamera und so weiter. In einem anderen Betriebsmodus kann das angezeigte Bild auch auf Bilddaten einer Vielzahl von Kameras beruhen. In einem Betriebsmodus kann aus den Bilddaten der Vielzahl von Kameras ein Bild erzeugt werden, welches das Kraftfahrzeug aus einer Vogelperspektive ("Bird View") zeigt, nämlich aus einem virtuellen Blickpunkt sowie einer virtuellen Blickrichtung. In einem anderen Betriebsmodus können Einzelbilder der Vielzahl von Kameras zu einem gemeinsamen Bild zusammengefasst werden, welches die Umgebung des Kraftfahrzeugs aus den Blickpunkten der einzelnen Kameras zeigt.

Sind eine Vielzahl von Kameras bereitgestellt, so kann eine Kamera an einer linken Seitenflanke und/oder eine Kamera an einem linken Außenspiegel und/oder eine Kamera an einer rechten Seitenflanke und/oder eine Kamera an einem rechten Außenspiegel und/oder eine Kamera an einem vorderen Stoßfänger und/oder eine Kamera an einem hinteren Stoßfänger und/oder eine Kamera an einer Heckklappe des Kraftfahrzeugs angeordnet sein. Die Vielzahl von Kameras können CMOS-Kameras (complementary metal-oxide semiconductor) und/oder CCD-Kameras (charge-coupled device) beinhalten.

Es hat sich im Hinblick auf ein plausibles und zuverlässiges Kamerasystem als vorteilhaft herausgestellt, wenn nach einem erneuten Vorliegen des Wertes für den Messparameter der zugeordnete Betriebsmodus nur unter der Voraussetzung automatisch aktiviert wird, dass zu diesem Wert des Messparameters eine vorbestimmte Anzahl von gespeicherten Datenwerten vorliegt, die denselben Betriebsmodus charakterisieren. Mit anderen Worten wird nach erneutem Erreichen des Wertes für den Messparameter der zugeordnete Betriebsmodus nur dann automatisch aktiviert, wenn bei diesem Wert des Messparameters eine vorbestimmte Anzahl von Aktivierungen desselben Betriebsmodus durch die Bedienperson erfasst wurde. Die vorbestimmte Anzahl kann beispielsweise in einem Wertebereich von 1 bis 5 liegen; sie kann 1 oder 2 oder 3 oder 4 oder 5 betragen. Auf diesem Wege gelingt es, ein ungewolltes beziehungsweise unerwünschtes Umschalten von einer Ansicht zu einer anderen Ansicht auf der Anzeigeeinrichtung zu verhindern. In einer Verwirklichung dieser Ausführungsform kann zu einem Wert des Messparameters ein Zähler definiert werden, welcher jedes Mal dann inkrementiert wird, wenn bei diesem Wert des Messparameters die Bedienperson einen und denselben Betriebsmodus aktiviert. Erreicht dieser Zähler die vorbestimmte Anzahl, so wird dieser Betriebsmodus zukünftig automatisch aktiviert.

Der Messparameter kann anhand von Positionsdaten eines Navigationssystems ermittelt werden. Diese Ausführungsform hat den Vorteil, dass anhand von Positionsdaten eines Navigationssystems eine Vielzahl von Messparametern ermittelt werden können. Beispielsweise wird als Messparameter eine aktuelle globale Position des Kraftfahrzeugs anhand der Positionsdaten ermittelt. Dann kann der Datenwert zugeordnet zu dem aktuellen Wert der globalen Position in der Speichereinrichtung abgelegt werden. Bei dieser Ausführungsform wird also erfasst beziehungsweise "gelernt", in welchen globalen Absolutpositionen des Kraftfahrzeugs welche Betriebsmodi der Anzeigeeinrichtung durch die Bedienperson aktiviert werden. Wird dies gelernt, so kann zukünftig die Aktivierung dieser Betriebsmodi automatisch beziehungsweise unabhängig von der Bedienperson erfolgen. Eine solche Vorgehensweise ist besonders vorteilhaft: In unterschiedlichen globalen absoluten Positionen des Kraftfahrzeugs werden dem Fahrer unterschiedliche Ansichten der Fahrzeugumgebung angezeigt, und zwar stets die gewünschten Ansichten beziehungsweise diejenigen Ansichten, die der Fahrer bereits einmal selbst aktiviert hat.

Der Datenwert kann ergänzend oder alternativ auch zugeordnet zu einer Information über einen aktuellen Fahrzustand des Kraftfahrzeugs als Messparameter abgelegt werden. Bei einem Fahrzustand des Kraftfahrzeugs kann es sich beispielsweise um die Geschwindigkeit des Kraftfahrzeugs und/oder um eine Fahrtrichtung des Kraftfahrzeugs und/oder um eine Längsbeschleunigung und/oder um eine Querbeschleunigung und/oder den momentan eingelegten Gang und/oder einen Zustand eines Scheibenwischers handeln. Eine solche Vorgehensweise ist ebenfalls besonders benutzerfreundlich: Es wird "gelernt", bei welchen Fahrzuständen des Kraftfahrzeugs - insbesondere bei welchen Geschwindigkeitswerten - welche Ansichten auf der Anzeigeeinrichtung durch die Bedienperson aktiviert werden. Dann können dieselben Ansichten bei dem jeweiligen Fahrzustand des Kraftfahrzeugs automatisch aktiviert werden, ohne dass der Fahrer eine Eingabe an einer Bedieneinrichtung vornehmen muss.

Sind mehr als zwei Messparameter vorgesehen, etwa die globale Position sowie die Geschwindigkeit des Kraftfahrzeugs, so wird jeder Messparameter vorzugsweise separat beziehungsweise unabhängig von den jeweils anderen Messparametern betrachtet und ausgewertet. Dies bedeutet, dass ein Betriebsmodus bereits bei einem erneuten Vorliegen des zugeordneten Wertes lediglich eines Messparameters automatisch aktiviert werden kann, und nicht etwa bei gleichzeitigem Vorliegen von zugeordneten Werten einer Vielzahl von Messparametern. Es ist also insbesondere nicht vorgesehen, dass ein Betriebsmodus nur dann automatisch aktiviert wird, wenn gleichzeitig die gewünschten Werte zu mehreren Messparametern vorliegen. Ein Betriebsmodus kann bereits bei einem erneuten Vorliegen des Wertes für einen einzigen Messparameter aktiviert werden.

Im Hinblick auf eine zuverlässige und plausible automatische Aktivierung eines Betriebsparameters kann vorgesehen sein, dass um den zum Datenwert des Betriebsmodus abgespeicherten Wert des Messparameters ein Toleranzintervall definiert wird. Der zugeordnete Betriebsmodus kann bereits dann automatisch aktiviert werden, wenn der momentane Wert des Messparameters in das Toleranzintervall fällt. Zum Beispiel wird ein Betriebsmodus bereits dann aktiviert werden, wenn sich das Kraftfahrzeug in einem zu einer globalen Position vordefinierten Bereich befindet.

Bezüglich der Anzeigeeinrichtung sind im Prinzip zwei alternative Ausführungsformen vorgesehen:
Die Anzeigeeinrichtung kann eine fahrzeugfeste Anzeigeeinrichtung sein, etwa ein an einer Mittelkonsole angebrachtes Display. Bei dieser Ausführungsform kann auch die zumindest eine Kamera eine fahrzeugfeste Kamera sein, die mit einer Recheneinrichtung beziehungsweise einer Steuereinrichtung über einen fahrzeuginternen Kommunikationsbus kommunizieren kann. Ein fahrzeuginterner Navigationsempfänger kann die Positionsdaten empfangen, und eine fahrzeuginterne Recheneinrichtung beziehungsweise Steuereinrichtung kann zwischen unterschiedlichen Betriebsmodi der Anzeigeeinrichtung umschalten.

In einer alternativen Ausführungsform ist die Anzeigeeinrichtung eine Anzeigeeinrichtung eines tragbaren Kommunikationsgerätes, nämlich insbesondere eines Mobiltelefons (Smartphone) oder aber eines tragbaren Personalcomputers (zum Beispiel Personal Digital Assistant). Ein solches tragbares Kommunikationsgerät ist dann unabhängig von der internen Fahrzeugarchitektur und separat zu fahrzeuginternen beziehungsweise fahrzeugfesten Komponenten ausgebildet. Diese Ausführungsform hat den Vorteil, dass der Fahrer ein solches tragbares Kommunikationsgerät auch bei Fahrzeugen einsetzen kann, welche über kein fahrzeugfestes Display verfügen. Bei dieser Ausführungsform kann die zumindest eine Kamera als eine Nachrüstkomponente an dem Kraftfahrzeug angeordnet sein, so dass die Bilddaten drahtlos an das tragbare Kommunikationsgerät übertragen werden. Eine solche Nachrüstkomponente kann nachträglich am Kraftfahrzeug montiert werden beziehungsweise das Kraftfahrzeug kann mit einer derartigen Nachrüstkomponente auch nachträglich aufgerüstet werden. Hier kann ein interner Navigationsempfänger des tragbaren Kommunikationsgerätes verwendet werden, um Positionsdaten zu empfangen.

Die Erfindung betrifft außerdem ein lernfähiges Kamerasystem für ein Kraftfahrzeug. Das Kamerasystem beinhaltet zumindest eine Kamera zum Erfassen von Bilddaten über eine Umgebung des Kraftfahrzeugs, wie auch eine Anzeigeeinrichtung, welche in zumindest zwei Betriebsmodi betrieben werden kann. Die Betriebsmodi unterscheiden sich voneinander in einer Ansicht der Umgebung auf der Anzeigeeinrichtung. Es sind Mittel bereitgestellt, welche einen Betriebsmodus der Anzeigeeinrichtung aufgrund einer Eingabe einer Bedienperson aktivieren. Es sind außerdem Mittel bereitgestellt, die beim Aktivieren des Betriebsmodus durch die Bedienperson einen diesen Betriebsmodus angebenden Datenwert zugeordnet zu einem aktuellen Wert zumindest eines Messparameters des Kraftfahrzeugs in einer Speichereinrichtung abspeichern und nach einem erneuten Vorliegen dieses Wertes für den Messparameter den zugeordneten Betriebsmodus der Anzeigeeinrichtung automatisch aktivieren.

Ein erfindungsgemäßes Fahrzeug, insbesondere ein Kraftfahrzeug, umfasst ein erfindungsgemäßes Kamerasystem.

Die mit Bezug auf das erfindungsgemäße Verfahren vorgestellten bevorzugten Ausführungsformen und deren Vorteile gelten entsprechend für das erfindungsgemäße Kamerasystem sowie für das erfindungsgemäße Fahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

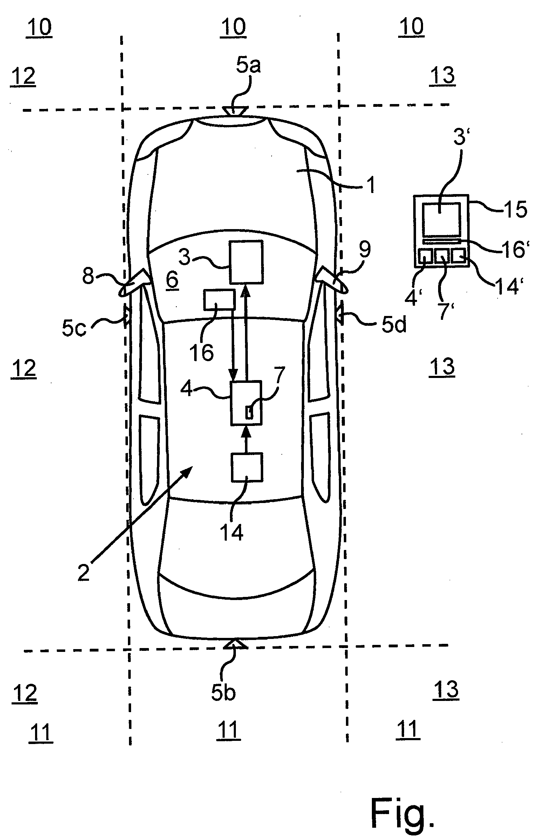

Die Erfindung wird nun anhand eines bevorzugten Ausführungsbeispiels näher erläutert, wie auch unter Bezugnahme auf die beigefügte Zeichnung. Dabei veranschaulicht die einzige Figur in schematischer Darstellung ein Kraftfahrzeug mit einem Kamerasystem gemäß einer Ausführungsform der Erfindung.

Ein Kraftfahrzeug 1 wie es in der Figur dargestellt ist, ist ein Personenkraftwagen. Das Kraftfahrzeug 1 umfasst ein Kamerasystem 2, welches folgende Komponenten umfasst: eine Anzeigeeinrichtung 3, eine Steuereinrichtung 4 beziehungsweise eine Recheneinrichtung, vier Kameras 5a bis 5d, wie auch einen Navigationsempfänger 14, zum Beispiel einen GPS-Empfänger. Die Steuereinrichtung 4 steuert die Anzeigeeinrichtung 3 an. Die Kameras 5a bis 5d übermitteln erfasste Bilddaten an die Steuereinrichtung 4, nämlich beispielsweise über einen internen Kommunikationsbus des Kraftfahrzeugs 1 oder aber drahtlos, nämlich über einen drahtlosen Kommunikationskanal.

Die Anzeigeeinrichtung 3 kann beispielsweise ein LCD-Display sein. Sie kann aber auch ein Bildprojektor sein, mittels dessen Bilder auf eine Windschutzscheibe 6 des Kraftfahrzeugs 1 projiziert werden können (ein Head-up Display).

Die Steuereinrichtung 4 kann beispielsweise einen digitalen Signalprozessor beinhalten, wie auch einen Mikrocoritroller sowie einen Speicher 7.

Die Kameras 5a bis 5d sind an einer äußeren Oberfläche des Kraftfahrzeugs 1 angebracht. Die Anzahl sowie die Anordnung der Kameras 5a bis 5d sind in der Figur lediglich beispielhaft dargestellt; je nach Ausführungsform kann die Anzahl der Kameras 5a bis 5d und/oder deren Anordnung an dem Kraftfahrzeug 1 variieren. Im Ausführungsbeispiel ist eine erste Kamera 5a an einem vorderen Stoßfänger des Kraftfahrzeugs 1 angeordnet, während eine zweite Kamera 5b an einem hinteren Stoßfänger oder aber an einer Heckklappe angeordnet ist. Eine dritte Kamera 5c ist an der linken Seitenflanke angebracht; sie kann auch in einen linken Außenspiegel 8 integriert sein. Eine vierte Kamera 5d ist an der rechten Seitenflanke angebracht, nämlich im Bereich eines rechten Außenspiegets 9. Auch die vierte Kamera 5d kann in den Außenspiegel 9 integriert sein.

Die Kameras 5a bis 5d weisen jeweils einen breiten Erfassungswinkel auf und sind somit so genannte Fischaugenkameras. Zum Beispiel kann der jeweilige Erfassungswinkel in einem Wertebereich von 170° bis 210° liegen. Alternativ können die Kameras 5a bis 5d auch kleinere Erfassungswinkel aufweisen. Insgesamt können die Erfassungswinkel zum Beispiel in einem Wertebereich von 40° bis 210° liegen. Wie aus der Figur hervorgeht, erfasst die erste Kamera 5a einen Bereich 10 vor dem Kraftfahrzeug 1, während die zweite Kamera 5b einen Bereich 11 hinter dem Kraftfahrzeug 1 erfasst. Entsprechend erfasst die dritte Kamera 5c einen Bereich 12 links neben dem Kraftfahrzeug 1; die vierte Kamera 5d erfasst einen Bereich 13 auf der rechten Seiten des Kraftfahrzeugs 1. Die Kameras 5a bis 5d können also im Wesentlichen die gesamte Umgebung um das Kraftfahrzeug 1 herum erfassen, nämlich ein 360°-Bild.

Die Kameras 5a bis 5d sind Videokameras und können jeweils zeitliche Abfolgen von Einzelbildern erfassen, die auf der Anzeigeeinrichtung 3 als ein Video angezeigt werden können.

In der Figur sind die Anzeigeeinrichtung 3, die Steuereinrichtung 4 sowie der Navigationsempfänger 14 als separate Komponenten dargestellt. Dies ist dann der Fall, wenn das Kamerasystem 2 ein fahrzeugfestes System ist, nämlich ein in dem Kraftfahrzeug 1 fest eingebautes Kamerasystem. In diesem Falle sind auch die Kameras 5a bis 5d am Kraftfahrzeug 1 fest montiert und beispielsweise werkseitig vorhanden. Es kann jedoch auch vorgesehen sein, dass anstatt eines solchen fahrzeugfesten Kamerasystems 2 ein von der Fahrzeugarchitektur unabhängiges Kamerasystem 2 als Nachrüstsystem eingesetzt wird. In diesem Falle sind die Kameras 5a bis 5d Nachrüstkomponenten, mit denen das Kraftfahrzeug 1 aufgerüstet werden kann. Solche Nachrüstkomponenten können dann am Kraftfahrzeug 1 nachträglich montiert werden. Bei einem solchen Nachrüstsystem kann auch ein in der Figur schematisch dargestelltes tragbares Kommunikationsgerät 15 eingesetzt werden, nämlich insbesondere dann, wenn das Kraftfahrzeug 1 über keine fahrzeugfeste Anzeigeeinrichtung 3 verfügt. Ein solches tragbares Kommunikationsgerät 15 kann zum Beispiel ein Mobiltelefon sein. Das tragbare Kommunikationsgerät 15 kann eine Anzeigeeinrichtung 3' aufweisen, etwa ein Display. Es kann außerdem eine interne Steuereinrichtung 4', wie auch einen internen Speicher 7' sowie einen internen Navigationsempfänger 14' beinhalten. In diesem Falle kann das tragbare Kommunikationsgerät 15 über einen drahtlosen Kommunikationskanal mit den Kameras 5a bis 5d kommunizieren, und zwar beispielsweise gemäß dem W-LAN-Standard (Wireless Local Area Network) und/oder dem Bluetooth-Standard. Das tragbare Kommunikationsgerät 15 kann auch eine Eingabeeinrichtung beziehungsweise Bedieneinrichtung 16' umfassen. Auch das fahrzeugfeste Kamerasystem 2 kann eine Eingabeeinrichtung 16 beinhalten, welche mit der Steuereinrichtung 4 elektrisch gekoppelt ist.

Obgleich nachfolgend von der fahrzeuginternen Anzeigeeinrichtung 3, der Steuereinrichtung 4, dem Navigationsempfänger 14 und der Eingabeeinrichtung 16 die Rede sein wird, bezieht sich die nachfolgende Beschreibung auch auf die Anzeigeeinrichtung 3', die Steuereinrichtung 4', die Eingabeeinrichtung 16' sowie den Navigationsempfänger 14' des tragbaren Kommunikationsgerätes 15.

Die Anzeigeeinrichtung 3, 3' kann zwischen unterschiedlichen Betriebsmodi umgeschaltet werden. Und zwar wird die Anzeigeeinrichtung 3, 3' durch die Steuereinrichtung 4, 4' angesteuert, welche die Bilddaten der Kameras 5a bis 5d empfängt und verarbeitet. Die Betriebsmodi der Anzeigeeinrichtung 3, 3' unterscheiden sich untereinander in der Ansicht der Umgebung 10, 11, 12, 13 des Kraftfahrzeugs 1. Insbesondere unterscheiden sich die Betriebsmodi untereinander in der Auswahl zumindest einer der Kameras 5a bis 5d, auf deren Bilddaten ein angezeigtes Bild beruht. Es sind folgende Betriebsmodi sinnvoll möglich:
- Betriebsmodus 1: Es wird ein Bild (Video) angezeigt, welches auf den Bilddaten der Kamera 5a beruht;
- Betriebsmodus 2: Es wird ein Bild angezeigt, welches auf den Bilddaten der Kamera 5b beruht;
- Betriebsmodus 3: Es wird ein Bild angezeigt, welches auf den Bilddaten der Kamera 5c beruht;
- Betriebsmodus 4: Es wird ein Bild angezeigt, welches auf den Bilddaten der Kamera 5d beruht;
- Betriebsmodus 5: Es wird ein synthetisches Bild angezeigt, welches auf den Bilddaten zumindest zweier Kameras 5a bis 5d beruht - hier kann die Steuereinrichtung 4, 4' beispielsweise ein synthetisches Bild erzeugen, welches das Kraftfahrzeug 1 sowie seine Umgebung 10 bis 13 aus der Vogelperspektive beziehungsweise aus einem virtuellen Blickpunkt sowie einer virtuellen Blickrichtung zeigt.

In den Betriebsmodi 1 bis 4 kann wahlweise entweder das gesamte Bild der jeweiligen Kamera 5a bis 5d angezeigt werden oder aber es kann lediglich ein Teilbild der jeweiligen Kamera 5a bis 5d angezeigt werden.

Mittels der Eingabeeinrichtung 16, 16' kann auch der Fahrer - oder eine andere Bedienperson - die Anzeigeeinrichtung 3, 3' zwischen unterschiedlichen Betriebsmodi und somit zwischen unterschiedlichen Ansichten der Umgebung 10 bis 13 Umschalten. Dabei ist das Kamerasystem 2 ein lernfähiges System: Wird durch den Fahrer ein bestimmter Betriebsmodus der Anzeigeeinrichtung 3, 3' aktiviert, so speichert die Steuereinrichtung 4, 4' in dem Speicher 7, 7' einen den ausgewählten Betriebsmodus angebenden beziehungsweise charakterisierenden Datenwert (zum Beispiel Betriebsmodus "1" oder Betriebsmodus "2" usw.), nämlich zugeordnet zu der aktuellen globalen Position des Kraftfahrzeugs 1. Diese wird durch die Steuereinrichtung 4, 4' anhand von Positionsdaten des Navigationsempfängers 14, 14' ermittelt. Die aktuelle globale Absolutposition des Kraftfahrzeugs 1 ist ein Messparameter im Sinne der vorliegenden Anmeldung. Wird zu der einmal abgespeicherten globalen Position derselbe Datenwert des Betriebsmodus beispielsweise zweimal oder dreimal oder viermal abgespeichert (oder auch umgekehrt), so wird dieser Betriebsmodus dann zukünftig automatisch aktiviert, wenn sich das Kraftfahrzeug 1 in der gespeicherten globalen Position befindet.

Als Messparameter können auch andere Parameter verwendet werden, nämlich insbesondere die aktuelle Geschwindigkeit des Kraftfahrzeugs 1. Eine solche Information kann die Steuereinrichtung 4, 4' beispielsweise von einem Radsensor empfangen.

Die Funktionsweise des Kamerasystems 2 kann beispielsweise anhand der folgenden Tabelle veranschaulicht werden:

| Datenwert | Globale Position | Anzahl bzw. Zähler |
|---|---|---|
| Betriebsmodus 1 | Position 1 | 2 |
| Betriebsmodus 2 | Position 2 | 1 |
| Betriebsmodus 3 | Position 3 | 3 |
| Betriebsmodus 4 | Position 4 | 1 |
| Betriebsmodus 5 | Position 5 | 1 |

Befindet sich beispielsweise das Kraftfahrzeug 1 in einer globalen Position 1 und aktiviert der Fahrer den Betriebsmodus 1, so wird ein Datenwert "Betriebsmodus 1" zugeordnet zu dem aktuellen Wert "Position 1" der globalen Position abgespeichert. Wird derselbe Betriebsmodus 1 noch einmal bei derselben globalen Position "Position 1" durch den Fahrer aktiviert, so wird ein Zähler inkrementiert (siehe dritte Spalte in der obigen Tabelle). Erreicht der Zähler einen vorbestimmten Wert von beispielsweise 3, so wird der jeweilige Betriebsmodus automatisch aktiviert, nämlich dann, wenn sich das Kraftfahrzeug in der dem Betriebsmodus zugeordneten globalen Position befindet. In der obigen Tabelle wurde zum Betriebsmodus 3 die globale Position "Position 3" bereits dreimal erfasst; somit kann der Betriebsmodus 3 bei der globalen Position "Position 3" automatisch durch die Steuereinrichtung 4, 4' aktiviert werden.

Wie bereits ausgeführt, können auch weitere Messparameter vorgesehen sein, etwa die Geschwindigkeit des Kraftfahrzeugs 1. Sind mehrere Messparameter (globale Position, Geschwindigkeit, Beschleunigung und dergleichen) vorgesehen, so wird jeder Messparameter separat, also unabhängig von den jeweils anderen Messparametern betrachtet und ausgewertet. Es ist insbesondere nicht vorgesehen, dass ein Betriebsmodus nur dann automatisch aktiviert wird, wenn gleichzeitig die gewünschten Werte zu mehreren Messparametern vorliegen. Ein Betriebsmodus kann bereits bei einem erneuten Vorliegen des Wertes für einen einzigen Messparameter aktiviert werden.

Um den jeweiligen Wert des Messparameters, beispielsweise um den Wert "Position 1 ", kann auch ein Toleranzintervall definiert werden, und der zugeordnete Betriebsmodus (zum Beispiel "Betriebsmodus 1 ") kann bereits dann automatisch aktiviert werden, wenn der momentane Wert für die globale Position in das Toleranzintervall fällt. Beispielsweise kann ein Betriebsmodus bereits dann aktiviert werden, wenn sich das Kraftfahrzeug 1 in einem bestimmten Bereich um diejenige globale Position befindet, welche diesem Betriebsmodus zugeordnet ist. Auf diesem Wege wird das Kamerasystem 2 weiterhin plausibilisiert.

## Patentansprüche

1. Verfahren zum Anzeigen von Bildern auf einer Anzeigeeinrichtung (3, 3') in einem Kraftfahrzeug (1), bei welchem zumindest eine Kamera (5a bis 5d) Bilddaten über eine Umgebung (10 bis 13) des Kraftfahrzeugs (1) erfasst und die Anzeigeeinrichtung (3, 3') in zumindest zwei Betriebsmodi betrieben wird, die sich in einer Ansicht der Umgebung (10 bis 13) auf der Anzeigeeinrichtung (3, 3') voneinander unterscheiden, wobei ein Aktivieren eines Betriebsmodus der Anzeigeeinrichtung (3, 3') aufgrund einer Eingabe einer Bedienperson erfolgt,
**dadurch gekennzeichnet, dass**
beim Aktivieren des Betriebsmodus durch die Bedienperson ein diesen Betriebsmodus angebender Datenwert (Betriebsmodus 1 bis Betriebsmodus 5) zugeordnet zu einem aktuellen Wert (Position 1 bis Position 5) zumindest eines Messparameters des Kraftfahrzeugs (1) in einer Speichereinrichtung (7, 7') abgelegt werden, und dass nach einem erneuten Vorliegen dieses Wertes (Position 1 bis Position 5) für den Messparameter der zugeordnete Betriebsmodus der Anzeigeeinrichtung (3, 3') automatisch aktiviert wird.

2. Verfahren nach Anspruch 1,
**dadurch gekennzeichnet, dass**
zumindest zwei Kameras (5a bis 5d) Bilddaten über die Umgebung (10 bis 13) erfassen und sich die Betriebsmodi der Anzeigeeinrichtung (3, 3') in der Auswahl zumindest einer Kamera (5a bis 5d) voneinander unterscheiden, auf deren Bilddaten das angezeigte Bild beruht.

3. Verfahren nach Anspruch 1 oder 2,
**dadurch gekennzeichnet, dass**
nach einem erneuten Vorliegen des Wertes (Position 1 bis Position 5) für den Messparameter der zugeordnete Betriebsmodus unter der Voraussetzung automatisch aktiviert wird, dass zu diesem Wert (Position 1 bis Position 5) des Messparameters eine vorbestimmte Anzahl von gespeicherten Datenwerten (Betriebsmodus 1 bis Betriebsmodus 5) vorliegt, die denselben Betriebsmodus charakterisieren.

4. Verfahren nach einem der vorhergehenden Ansprüche,
**dadurch gekennzeichnet, dass**
der Messparameter anhand von Positionsdaten eines Navigationsempfängers (14, 14') ermittelt wird.

5. Verfahren nach Anspruch 4,
**dadurch gekennzeichnet, dass**
als Messparameter eine aktuelle globale Position des Kraftfahrzeugs (1) anhand der Positionsdaten ermittelt wird, und dass der Datenwert (Betriebsmodus 1 bis Betriebsmodus 5) zugeordnet zu der aktuellen globalen Position abgelegt wird.

6. Verfahren nach einem der vorhergehenden Ansprüche,
**dadurch gekennzeichnet, dass**
der Datenwert (Betriebsmodus 1 bis Betriebsmodus 5) zugeordnet zu einer Information über einen aktuellen Fahrzustand des Kraftfahrzeugs (1) als Messparameter, insbesondere zugeordnet zu einem aktuellen Wert der Geschwindigkeit des Kraftfahrzeugs (1), abgelegt wird.

7. Verfahren nach einem der vorhergehenden Ansprüche,
**dadurch gekennzeichnet, dass**
die Anzeigeeinrichtung (3, 3') eine fahrzeugfeste Anzeigeeinrichtung (3) ist.

8. Verfahren nach einem der Ansprüche 1 bis 6,
**dadurch gekennzeichnet, dass**
die Anzeigeeinrichtung (3, 3') eine Anzeigeeinrichtung (3') eines tragbaren Kommunikationsgerätes (15) ist.

9. Verfahren nach Anspruch 8,
**dadurch gekennzeichnet, dass**
die zumindest eine Kamera (5a bis 5d) als Nachrüstkomponenten an dem Kraftfahrzeug (1) angeordnet ist und die Bilddaten drahtlos an das tragbare Kommunikationsgerät (15) überträgt.

10. Kamerasystem (2) für ein Kraftfahrzeug (1), mit:
- zumindest einer Kamera (5a bis 5d) zum Erfassen von Bilddaten über eine Umgebung (10 bis 13) des Kraftfahrzeugs (1),
- einer Anzeigeeinrichtung (3, 3'), welche in zumindest zwei Betriebsmodi betreibbar ist, die sich in einer Ansicht der Umgebung (10 bis 13) voneinander unterscheiden, und
- Mitteln (4, 4') zum Aktivieren eines Betriebsmodus der Anzeigeeinrichtung (3, 3') aufgrund einer Eingabe einer Bedienperson,
**gekennzeichnet durch**
Mittel (4, 4'), die beim Aktivieren des Betriebsmodus **durch** die Bedienperson einen diesen Betriebsmodus angebenden Datenwert (Betriebsmodus 1 bis Betriebsmodus 5) zugeordnet zu einem aktuellen Wert (Position 1 bis Position 5) zumindest eines Messparameters des Kraftfahrzeugs (1) in einer Speichereinrichtung (7, 7') abspeichern und nach einem erneuten Vorliegen dieses Wertes (Position 1 bis Position 5) für den Messparameter den zugeordneten Betriebsmodus der Anzeigeeinrichtung (3, 3') automatisch aktivieren.

11. Fahrzeug (1) mit einem Kamerasystem (2) nach Anspruch 10.

## Claims

1. Method for displaying images on a display device (3, 3') in a motor vehicle (1), in which at least one camera (5a to 5d) acquires image data relating to an environment (10 to 13) of the motor vehicle (1) and the display device (3, 3') is operated in at least two operating modes which differ from one another in terms of a view of the environment (10 to 13) on the display device (3, 3'), an operating mode of the display device (3, 3') being activated on the basis of an input by an operator,
**characterized in that**
when the operating mode is activated by the operator, a data value (operating mode 1 to operating mode 5) indicating this operating mode is stored in a storage device (7, 7') in a manner assigned to a current value (position 1 to position 5) of at least one measurement parameter of the motor vehicle (1), and **in that**, after this value (position 1 to position 5) for the measurement parameter is present again, the assigned operating mode of the display device (3, 3') is automatically activated.

2. Method according to Claim 1,
**characterized in that**
at least two cameras (5a to 5d) acquire image data relating to the environment (10 to 13) and the operating modes of the display device (3, 3') differ from one another in the selection of at least one camera (5a to 5d), the image data from which are used as a basis for the displayed image.

3. Method according to Claim 1 or 2,
**characterized in that**
after the value (position 1 to position 5) for the measurement parameter is present again, the assigned operating mode is automatically activated provided that a predetermined number of stored data values (operating mode 1 to operating mode 5) which characterize the same operating mode is present for this value (position 1 to position 5) of the measurement parameter.

4. Method according to one of the preceding claims,
**characterized in that**
the measurement parameter is determined using position data from a navigation receiver (14, 14').

5. Method according to Claim 4,
**characterized in that**
a current global position of the motor vehicle (1) is determined as the measurement parameter using the position data, and **in that** the data value (operating mode 1 to operating mode 5) is stored in a manner assigned to the current global position.

6. Method according to one of the preceding claims,
**characterized in that**
the data value (operating mode 1 to operating mode 5) is stored in a manner assigned to an item of information relating to a current driving state of the motor vehicle (1), in particular in a manner assigned to a current value of the speed of the motor vehicle (1), as the measurement parameter.

7. Method according to one of the preceding claims,
**characterized in that**
the display device (3, 3') is a display device (3) which is fixed to the vehicle.

8. Method according to one of Claims 1 to 6,
**characterized in that**
the display device (3, 3') is a display device (3') of a portable communication device (15).

9. Method according to Claim 8,
**characterized in that**
the at least one camera (5a to 5d) is arranged as retrofitted components on the motor vehicle (1) and wirelessly transmits the image data to the portable communication device (15).

10. Camera system (2) for a motor vehicle (1), having:
- at least one camera (5a to 5d) for acquiring image data relating to an environment (10 to 13) of the motor vehicle (1),
- a display device (3, 3') which can be operated in at least two operating modes which differ from one another in terms of a view of the environment (10 to 13), and
- means (4, 4') for activating an operating mode of the display device (3, 3') on the basis of an input by an operator,
**characterized by**
means (4, 4') which, when the operating mode is activated by the operator, store a data value (operating mode 1 to operating mode 5) indicating this operating mode in a storage device (7, 7') in a manner assigned to a current value (position 1 to position 5) of at least one measurement parameter of the motor vehicle (1) and, after this value (position 1 to position 5) for the measurement parameter is present again, automatically activate the assigned operating mode of the display device (3, 3').

11. Vehicle (1) having a camera system (2) according to Claim 10.

## Revendications

1. Procédé d'affichage d'images sur un dispositif d'affichage (3, 3') dans un véhicule automobile (1), dans lequel au moins une caméra (5a à 5d) détecte des données d'images concernant un environnement (10 à 13) du véhicule automobile (1) et le dispositif d'affichage (3, 3') est mis en fonctionnement dans au moins deux modes de fonctionnement qui diffèrent l'un de l'autre par une vue de l'environnement (10 à 13) sur le dispositif d'affichage (3, 3'), dans lequel une activation d'un mode de fonctionnement du dispositif d'affichage (3, 3') s'effectue sur la base d'une entrée fournie par un opérateur,
**caractérisé en ce que**, lors de l'activation du mode de fonctionnement par l'opérateur, une valeur de données indiquant ledit mode de fonctionnement (mode de fonctionnement 1 à mode de fonctionnement 5) est stockée dans un dispositif de mémoire (7, 7') de manière associée à une valeur actuelle (position 1 à position 5) d'au moins un paramètre de mesure du véhicule automobile (1), et **en ce que** lorsque ladite valeur (position 1 à position 5) du paramètre de mesure est de nouveau présente, le mode de fonctionnement associé du dispositif d'affichage (3, 3') est automatiquement activé.

2. Procédé selon la revendication 1,
**caractérisé en ce qu'**au moins deux caméras (5a à 5d) détectent des données d'images concernant l'environnement (10 à 13) et les modes de fonctionnement du dispositif d'affichage (3, 3') diffèrent l'un de l'autre par la sélection d'au moins une caméra (5a à 5d) dont les données d'images sont utilisées pour l'image affichée.

3. Procédé selon la revendication 1 ou 2,
**caractérisé en ce que**, lorsque la valeur (position 1 à position 5) du paramètre de mesure est de nouveau présente, le mode de fonctionnement associé est automatiquement activé sous réserve qu'un nombre prédéterminé de valeurs de données stockées (mode de fonctionnement 1 à mode de fonctionnement 5) qui caractérisent le mode de fonctionnement proprement dit, soient présentes pour cette valeur (position 1 à position 5) du paramètre de mesure.

4. Procédé selon l'une quelconque des revendications précédentes,
**caractérisé en ce que** le paramètre de mesure est déterminé à partir de données de position d'un récepteur de navigation (14, 14').

5. Procédé selon la revendication 4,
**caractérisé en ce qu'**une position globale actuelle du véhicule automobile (1) est déterminée en tant que paramètre de mesure à partir des données de position, et **en ce que** la valeur de données (mode de fonctionnement 1 à mode de fonctionnement 5) est stockée de manière associée à la position globale actuelle.

6. Procédé selon l'une quelconque des revendications précédentes,
**caractérisé en ce que** la valeur de données (mode de fonctionnement 1 à mode de fonctionnement 5) est stockée de manière associée à une information concernant un état de conduite actuel du véhicule automobile (1) en tant que paramètre de mesure, notamment de manière associée à une valeur actuelle de la vitesse du véhicule automobile (1).

7. Procédé selon l'une quelconque des revendications précédentes,
**caractérisé en ce que** le dispositif d'affichage (3, 3') est un dispositif d'affichage (3) fixé au véhicule.

8. Procédé selon l'une quelconque des revendications 1 à 6,
**caractérisé en ce que** le dispositif d'affichage (3, 3') est un dispositif d'affichage (3') d'un appareil de communication portable (15).

9. Procédé selon la revendication 8,
**caractérisé en ce que** l'au moins une caméra (5a à 5d) est disposée en tant que composant auxiliaire sur le véhicule automobile (1) et **en ce qu'**elle transmet les données d'images sans fil à l'appareil de communication portable (15).

10. Système de caméra (2) destiné à un véhicule automobile (1), comportant :
- au moins une caméra (5a à 5d) destinée à détecter des données d'images concernant un environnement (10 à 13) du véhicule automobile (1),
- un dispositif d'affichage (3, 3') qui peut être mis en fonctionnement dans au moins deux modes de fonctionnement qui diffèrent l'un de l'autre par une vue de l'environnement (10 à 13), et
- des moyens (4, 4') destinés à activer un mode de fonctionnement du dispositif d'affichage (3, 3') sur la base d'une entrée fournie par un opérateur,
**caractérisé par**
des moyens (4, 4') qui, lors de l'activation du mode de fonctionnement par l'opérateur, stockent une valeur de données indiquant ledit mode de fonctionnement (mode de fonctionnement 1 à mode de fonctionnement 5) de manière associée à une valeur actuelle (position 1 à position 5) d'au moins un paramètre de mesure du véhicule automobile (1) dans un dispositif de mémoire (7, 7'), et activent automatiquement le mode de fonctionnement associé du dispositif d'affichage (3, 3') lorsque ladite valeur (position 1 à position 5) du paramètre de mesure est de nouveau présente.

11. Véhicule (1) comportant un système de caméra (2) selon la revendication 10.
